# EUROPÄISCHE PATENTANMELDUNG

(11) **EP 4 852 037 A1**
(43) Veröffentlichungstag der Anmeldung: **09.12.2026**
(21) Anmeldenummer: 26181079.0
(22) Anmeldetag: 26.05.2026
(51) Int. Cl.: H01G 2/02, H01G 4/01, H01G 4/232, H01G 11/70, H01R 13/04

(54) **KOPPELKONDENSATOR MIT KONTAKTMESSER**

(30) Priorität: 03.06.2025 DE 102025121715; 29.01.2026 DE 102026103842
(71) Anmelder: Power Plus Communications AG, 68167 Mannheim (DE)
(72) Erfinder: Marahtanov, Viktor, 64289 Darmstadt (DE)
(74) Vertreter: Patentanwälte Bauer Vorberg Kayser

(57) **Zusammenfassung**

Die Erfindung betrifft einen Koppelkondensator (1) mit einem ersten Kontaktmesser (8) und mit einem zweiten Kontaktmesser (9) zur elektrischen Kontaktierung des Koppelkondensators (1), wobei der Koppelkondensator (1) einen dielektrischen Kondensatorkörper (10) aufweist. Erfindungsgemäß ist das erste Kontaktmesser (8) und/oder das zweite Kontaktmesser (9) elastisch ausgebildet, wobei das erste Kontaktmesser (8) und/oder das zweite Kontaktmesser (9) ein elastisches Kernmaterial und eine Metallschicht (12) aufweist, die eine Kontaktfläche (11) des ersten Kontaktmessers (8) bzw. des zweiten Kontaktmessers (9) bildet. Nach einem weiteren Aspekt der Erfindung wird eine Kontaktierungsanordnung mit dem vorangehend beschriebenen Koppelkondensator (1) und mit einem Aufnahmeelement zur elektrischen Kontaktierung des Koppelkondensators (1) vorgeschlagen.

## Beschreibung

Die Erfindung betrifft einen Koppelkondensator mit einem ersten Kontaktmesser und mit einem zweiten Kontaktmesser zur elektrischen Kontaktierung des Koppelkondensators, wobei der Koppelkondensator einen dielektrischen Kondensatorkörper aufweist. Ferner betrifft die Erfindung eine Kontaktierungsanordnung, die einen solchen Koppelkondensator und ein Aufnahmeelement aufweist.

Mit einem Koppelkondensator lassen sich verschiedene Segmente einer Schaltung galvanisch voneinander trennen, wobei diese jedoch kapazitiv miteinander gekoppelt sind. Verallgemeinert gesprochen wird durch einen Koppelkondensator ein Gleichstromfluss unterbunden, während Wechselspannungsanteile über den Koppelkondensator übertragen werden können. Allerdings kann auch eine Kopplung von Wechselspannungsanteilen frequenzabhängig unterbunden werden. So ist es beispielsweise im Bereich der öffentlichen Stromversorgung eine Aufgabe von Koppelkondensatoren, ton- und hochfrequente Kommunikationssignale über Isolationsstrecken hinweg zu koppeln, während gleichzeitig eine niederfrequente Kopplung des Stromnetzes vermieden wird. Im Bereich der öffentlichen Stromversorgung im 0,4 kV Stromnetz werden im Kontext der Powerline Communication (PLC), die eine Datenübertragung über elektrische Leitungen insbesondere in Niederspannungsnetzen ermöglicht, sogenannte PLC-Koppelkondensatoren eingesetzt. PLC-Koppelkondensatoren sind in der Regel dazu vorgesehen, Signale in einem Frequenzbereich von 9 kHz bis 500 kHz (Schmalband-PLC) sowie von 1,8 bis 30 MHz (Breitband-PLC) über Trennstellen im elektrischen Stromnetz zu koppeln, sowie gleichzeitig die Trennung der Netzspannung mit einer Frequenz von 50 bis 60 Hz sicherzustellen.

In der Druckschrift DE 197 25 115 A1 ist ein Niederspannungsphasenkoppler beschrieben. Dieser ist für einen Frequenzbereich von 9 kHz bis 1 GHz vorgesehen und soll in Verbindung mit Power-Line- oder Distribution-Line-Carrier-Systemen eingesetzt werden. Dieser Niederspannungsphasenkoppler weist handelsübliche Bauteile und Bauelemente auf. Eine Kontaktierung erfolgt über sogenannte Kontaktmesser, bei denen es sich um Kontaktelemente handelt, die insbesondere zur Führung und Trennung größerer Ströme geeignet sind. Mit Kontaktmessern dieser Art sind beispielsweise regelmäßig auch Niederspannungs-Hochleistungssicherungen (NH-Sicherungen) ausgestattet. Kontaktmesser sind in der Regel als massive Körper ausgeführt. Diese können zum Beispiel aus Phosphorbronze gefertigt sein. Ein Kondensatorkörper eines Koppelkondensators, der die Kontaktmesser voneinander galvanisch trennt, kann gemäß dem Stand der Technik beispielsweise aus Keramik ausgeführt sein. Ein solcher Koppelkondensator weist eine Kontaktbelastbarkeit mit vergleichsweise großen Stromstärken in Höhe von beispielsweise 250 A auf.

Der Erfindung liegt vor diesem Hintergrund die Aufgabe zugrunde, einen Koppelkondensator bereitzustellen, der demgegenüber leichter, kostengünstiger und/oder ressourcenschonender ist, und der Beschädigungen bei der Kontaktierung verhindert. Es ist eine weitere Aufgabe der Erfindung, eine Kontaktierungsanordnung bereitzustellen, die einen solchen Koppelkondensator aufweist. Die Aufgaben werden gelöst durch Angabe des Koppelkondensators nach Anspruch 1 und der Kontaktierungsanordnung nach Anspruch 15. In den abhängigen Ansprüchen sind optionale Ausgestaltungsformen der Erfindung angegeben. Die Beschreibung und die Zeichnungen charakterisieren die Erfindung zusätzlich.

Es wird darauf hingewiesen, dass die in den unabhängigen und in den abhängigen Patentansprüchen aufgeführten Merkmale in beliebiger Weise miteinander kombiniert werden können, soweit dies technisch sinnvoll ist. Dies gilt über die Grenzen der Anspruchskategorien hinweg und auch dann, wenn ein Patentanspruch nicht von einem anderen Patentanspruch gleicher Anspruchskategorie abhängig ist. Sofern in den Patentansprüchen oder der Beschreibung Elemente mit Zahlwörtern wie "erste", "zweite" etc. versehen sind, so dienen die Zahlwörter nur dazu, die Elemente unterscheidbar zu machen, treffen aber keine Aussage über eine Reihenfolge, eine Gesamtanzahl oder sonstige Eigenschaften der Elemente, es sei denn, dies wird explizit kenntlich gemacht.

Nach einem ersten Aspekt der Erfindung wird ein Koppelkondensator gemäß der eingangs beschriebenen Gattung vorgeschlagen, wobei der Koppelkondensator erfindungsgemäß so ausgestaltet ist, dass das erste Kontaktmesser und/oder das zweite Kontaktmesser elastisch ausgebildet ist, und wobei das erste Kontaktmesser und/oder das zweite Kontaktmesser ein elastisches Kernmaterial und eine Metallschicht aufweist, die eine Kontaktfläche des ersten Kontaktmessers bzw. des zweiten Kontaktmessers bildet.

Durch die Verwendung des elastischen Kernmaterials können sich das erste und/oder das zweite Kontaktmesser beim Einschub in ein Aufnahmeelement zur elektrischen Kontaktierung flexibel an dieses anpassen, was den Verbindungsvorgang erleichtert. Die Kontaktmesser sind aufgrund des Kernmaterials flexibel, was auch reibungsbedingte Schäleffekte an der Metallschicht beim Einstecken in das Aufnahmeelement verhindern kann.

Das erste Kontaktmesser und das zweite Kontaktmesser dienen zur elektrischen Kontaktierung des Koppelkondensators. Eine konkrete Form ist nicht vorgegeben, das erste Kontaktmesser und das zweite Kontaktmesser weisen jedoch bevorzugt eine flächige und/oder längliche Form auf. Es ist erfindungsgemäß möglich, dass der Kondensatorkörper, das erste Kontaktmesser und/oder das zweite Kontaktmesser so dimensioniert ist, dass der Kondensatorkörper, das erste Kontaktmesser und/oder das zweite Kontaktmesser durch einen Sicherungshalter für Niederspannungs-Hochleistungssicherungen (NH) gemäß DIN 43620-1 aufgenommen bzw. gehalten werden kann. Vorzugsweise ist der Kondensatorkörper, das erste Kontaktmesser und/oder das zweite Kontaktmesser gemäß der Größe NH-2 nach DIN 43620-1 dimensioniert. In diesem Fall weist das erste Kontaktmesser und/oder das zweite Kontaktmesser eine sogenannte Schwertlänge, d. h. eine Länge des jeweiligen Kontaktmessers, von 150 mm auf. Der Koppelkondensator kann gemäß anderen Ausgestaltungsformen der Erfindung jedoch auch davon abweichend dimensioniert sein.

Der Kondensatorkörper ist vorzugsweise zwischen dem ersten Kontaktmesser und dem zweiten Kontaktmesser angeordnet. Der Kondensatorkörper kann nach vorteilhaften Ausgestaltungsformen der Erfindung so angeordnet sein, dass er an das erste Kontaktmesser und/oder an das zweite Kontaktmesser angrenzt. Das erste Kontaktmesser und/oder das zweite Kontaktmesser können an dem Kondensatorkörper befestigt sein. Der Kondensatorkörper besteht bevorzugt zumindest teilweise aus einem dielektrischen Material. Er ist vorzugsweise so angeordnet, dass er das erste Kontaktmesser von dem zweiten Kontaktmesser beabstandet und galvanisch trennt. Das erste Kontaktmesser und das zweite Kontaktmesser können an entgegengesetzten Seiten des Kondensatorkörpers angeordnet sein. Der Kondensatorkörper kann in Abhängigkeit von der gewählten Ausführungsform unterschiedlich dimensioniert sein. Es ist vorteilhaft, wenn der Kondensatorkörper so dimensioniert ist, dass er die Kontaktmesser um eine Strecke voneinander beabstandet, die länger ist als eine Schwertlänge des ersten Kontaktmessers bzw. des zweiten Kontaktmessers.

Der Kondensatorkörper kann grundsätzlich durch verschiedenste Materialien oder Bauteile gebildet werden. Erfindungsgemäß kann der Kondensatorkörper durch ein Kunststoffmaterial, einen Keramikwerkstoff oder einen Gießharzwerkstoff gebildet werden. Allerdings ist auch der Einsatz sonstiger Materialien möglich. Der Kondensatorkörper kann auch durch ein diskretes Kondensatorbauteil gebildet werden. Dabei sind auch komplexere Bauformen denkbar, zum Beispiel könnte das Kondensatorbauteil ein Schichtkondensator sein.

Das elastische Kernmaterial kann prinzipiell durch ein beliebiges elastisches Material gebildet werden. Es kann einstückig ausgebildet sein oder aus mehreren Teilen bestehen. Das elastische Kernmaterial des ersten Kontaktmessers entspricht nicht zwangsweise dem elastischen Kernmaterial des zweiten Kontaktmessers, noch muss das Kernmaterial des ersten Kontaktmessers mit dem Kernmaterial des zweiten Kontaktmessers verbunden sein. Nach vorteilhaften Ausgestaltungsformen der Erfindung wird das Kernmaterial durch ein dielektrisches Material gebildet, doch dies ist nicht zwangsläufig erforderlich. Erfindungsgemäß kann das Kernmaterial insbesondere durch einen Kunststoff gebildet werden oder durch ein Leiterplattenmaterial. Das Kernmaterial ist vorzugsweise flächig dimensioniert. Darunter ist vorzugsweise zu verstehen, dass seine Dicke wesentlich geringer ist als seine Länge und seine Breite. So kann das Kernmaterial beispielsweise als eine Platte bzw. flach dimensioniert sein. Dies erhöht seine Biegsamkeit. Das Kernmaterial kann gemäß vorteilhaften Ausführungsformen durch das gleiche Material gebildet werden wie der Kondensatorkörper. Gemäß Varianten der Erfindung kann es auch vorgesehen sein, dass das Kernmaterial mit dem Kondensatorkörper einstückig ausgeführt ist, in den Kondensatorkörper eingesteckt ist oder mit dem Kondensatorkörper anderweitig verbunden ist.

Das erste Kontaktmesser und/oder das zweite Kontaktmesser weist eine Metallschicht auf, die eine Kontaktfläche des ersten Kontaktmessers bzw. des zweiten Kontaktmessers bildet. Insbesondere kann das erste Kontaktmesser eine Metallschicht aufweisen, die eine Kontaktfläche des ersten Kontaktmessers bildet, und/oder das zweite Kontaktmesser kann eine Metallschicht aufweisen, die eine Kontaktfläche des zweiten Kontaktmessers bildet. Die Metallschicht kann beispielsweise abschnittsweise auf mindestens eine Oberfläche des Kernmaterials aufgebracht sein. Dabei kann die Metallschicht auf dem Kernmaterial in einem oder mehreren Abschnitten vorliegen. Bevorzugt wird eine erste flächige Metallkontaktschicht auf einer ersten Außenseite des jeweiligen Kontaktmessers gebildet und eine zweite flächige Metallkontaktschicht wird auf einer zweiten Außenseite des jeweiligen Kontaktmessers gebildet.

Der Koppelkondensator ist bevorzugt so dimensioniert bzw. ausgestaltet, dass er auf eine Kopplung von Signalen in einem Bereich von 1,8 MHz bis 30 MHz beschränkt ist. Der Koppelkondensator ist bevorzugt ferner so ausgestaltet, dass er eine dauerhafte Stromtragfähigkeit von weniger als 0,5 mA aufweist. Ein Koppelkondensator weist gemäß dieser Ausgestaltungsform eine Stromtragfähigkeit auf, die deutlich unter einer Stromtragfähigkeit von Koppelkondensatoren liegt, die aus dem Stand der Technik bekannt sind. Zugleich erlaubt dies jedoch auch vereinfachte Bauformen im Sinne der vorliegenden Erfindung. Tatsächlich kann der im Rahmen dieser Offenbarung beschriebene Koppelkondensator ohne Einbußen der Funktionalität zur Datenübertragung nach den Kommunikationsstandards IEEE 1901:2010, IEEE 1901:2020 und G.hn über Stromleiter der öffentlichen Stromversorgung verwendet werden. IEEE 1901 ist ein Standard für die Datenkommunikation über Stromleitungen, sogenanntes Breitband Powerline (BPL). G.hn, auch als "HomeGrid-Standard" bezeichnet, bezeichnet eine Heimnetzwerktechnologie, deren technische Norm von der Internationalen Fernmeldeunion (ITU) entwickelt worden ist. Es versteht sich, dass der erfindungsgemäße Koppelkondensator auch zur Datenübertragung gemäß sonstigen Kommunikationsstandards und/oder Kommunikationsverfahren über Stromnetze verwendet werden kann.

Es ist vorteilhaft, wenn das Kernmaterial mindestens einen flächig dimensionierten, elastischen Träger aus einem dielektrischen Material umfasst. Somit kann das erste Kontaktmesser und/oder das zweite Kontaktmesser gemäß vorteilhaften Ausgestaltungsformen mindestens einen flächig dimensionierten, elastischen Träger aus einem dielektrischen Material umfassen. Ein Koppelkondensator mit einem solchen Kernmaterial kann vergleichsweise kostengünstig und ressourcenschonend hergestellt werden. Bevorzugt wird das Kernmaterial ausschließlich durch den mindestens einen flächig dimensionierten, elastischen Träger gebildet. Dass der Träger flächig dimensioniert ist, ist vorzugsweise so zu verstehen, dass seine Dicke wesentlich geringer ist als seine Länge und seine Breite. So kann der Träger beispielsweise als eine Platte bzw. flach dimensioniert sein. Der Träger kann beispielsweise eine Stärke von 0,5 mm bis 5 mm aufweisen, wobei jedoch auch andere Stärken erfindungsgemäß gewählt werden können. Der Träger ist vorzugsweise aus einem elastischen Material gefertigt, insbesondere aus einem elastischen Kunststoffmaterial oder einem Verbundmaterial. So ist es erfindungsgemäß beispielsweise möglich, dass der Träger aus einem Leiterplattenmaterial gefertigt ist, dass der Träger eine Leiterplatte ist oder dass der Träger aus einem Abschnitt einer Leiterplatte gefertigt ist. Da der Träger aus einem dielektrischen Material besteht, besitzt er elektrisch isolierende Eigenschaften. Die Metallschicht ist bevorzugt auf mindestens einen der flächig dimensionierten, elastischen Träger aufgebracht.

Nach erfindungsgemäßen Ausgestaltungsformen ist es möglich, dass das erste Kontaktmesser und/oder das zweite Kontaktmesser durch nur einen flächig dimensionierten, elastischen Träger gebildet wird. Allerdings sind Ausführungsvarianten besonders vorteilhaft, bei denen das erste Kontaktmesser und/oder das zweite Kontaktmesser durch mehrere flächig dimensionierte, elastische Träger gebildet wird, insbesondere durch mehrere übereinander und/oder aneinander angeordnete Träger. Sofern mehrere flächig dimensionierte, elastische Träger vorgesehen sind, so können diese beispielsweise miteinander verklebt sein und/oder klemmend gehalten sein, sodass sie aneinandergedrückt werden. Insbesondere können die mehreren flächig dimensionierten, elastischen Träger durch ein oder mehrere Halteelemente klemmend gehalten werden. Die vorgenannten Halteelemente sind vorzugsweise dem Kondensatorkörper zugehörig. Es ist erfindungsgemäß möglich, dass das erste Kontaktmesser und das zweite Kontaktmesser durch verschiedene flächig dimensionierte, elastische Träger gebildet werden. Alternativ können das erste Kontaktmesser und das zweite Kontaktmesser jedoch auch durch denselben bzw. dieselben Träger gebildet werden. Vorzugsweise bildet ein Abschnitt des Trägers bzw. der Träger auch den Kondensatorkörper oder einen Teil des Kondensatorkörpers. Dies ermöglicht eine vereinfachte Konstruktion des Koppelkondensators.

Das erste Kontaktmesser und/oder das zweite Kontaktmesser umfasst vorzugsweise einen ersten flächig dimensionierten, elastischen Träger und einen zweiten flächig dimensionierten, elastischen Träger, wobei die Metallschicht zur Bildung der Kontaktfläche des ersten Kontaktmessers bzw. des zweiten Kontaktmessers auf zumindest einer nach außen gewandten Oberfläche des ersten flächig dimensionierten, elastischen Trägers und/oder des zweiten flächig dimensionierten, elastischen Trägers aufgebracht ist. Dies ist bevorzugt so zu verstehen, dass die Metallschicht zur Bildung der Kontaktfläche des ersten Kontaktmessers auf zumindest einer nach außen gewandten Oberfläche des ersten flächig dimensionierten, elastischen Trägers aufgebracht ist und/oder die Metallschicht zur Bildung der Kontaktfläche des zweiten Kontaktmessers auf zumindest einer nach außen gewandten Oberfläche des zweiten flächig dimensionierten, elastischen Trägers aufgebracht ist. Beispielsweise kann eine erste flächige Metallkontaktschicht auf einer ersten Oberfläche des ersten flächig dimensionierten, elastischen Trägers gebildet werden, und eine zweite flächige Metallkontaktschicht kann auf einer zweiten Oberfläche des zweiten flächig dimensionierten, elastischen Trägers gebildet werden, wobei die erste Oberfläche des ersten flächig dimensionierten, elastischen Trägers von dem zweiten flächig dimensionierten, elastischen Träger abgewandt ist, und wobei die zweite Oberfläche des zweiten flächig dimensionierten, elastischen Trägers von dem ersten flächig dimensionierten, elastischen Träger abgewandt ist. In diesem Sinne ist eine Oberfläche des jeweiligen flächig dimensionierten, elastischen Trägers bevorzugt als nach außen gewandt aufzufassen, wenn sie außenseitig an dem jeweiligen Kontaktmesser zugänglich ist und/oder nicht dem jeweils anderen flächig dimensionierten, elastischen Träger zugewandt ist.

Nach einer vorteilhaften Variante der Erfindung ist vorgesehen, dass der dielektrische Kondensatorkörper teilweise oder vollständig durch den mindestens einen flächig dimensionierten, elastischen Träger gebildet wird. Es ist erfindungsgemäß insbesondere möglich, dass der erste flächig dimensionierte, elastische Träger und der zweite flächig dimensionierte, elastische Träger den Kondensatorkörper vollständig bilden oder einen Teil des Kondensatorkörpers bilden. Somit kann der Kondensatorkörper oder ein Teil des Kondensatorkörpers einstückig mit dem ersten Kontaktmesser und/oder dem zweiten Kontaktmesser ausgeführt sein. Mithin ist es auch möglich, dass derselbe erste flächig dimensionierte, elastische Träger und derselbe zweite flächig dimensionierte, elastische Träger sowohl Teil des ersten Kontaktmessers als auch des zweiten Kontaktmessers sind. Nach anderen Ausführungsformen der Erfindung umfasst das erste Kontaktmesser den ersten flächig dimensionierten, elastischen Träger und den zweiten flächig dimensionierten, elastischen Träger, während das zweite Kontaktmesser einen dritten flächig dimensionierten, elastischen Träger und einen vierten flächig dimensionierten, elastischen Träger umfasst. Auch der Kondensatorkörper muss nicht notwendigerweise einstückig mit dem ersten Kontaktmesser und/oder dem zweiten Kontaktmesser ausgeführt sein, sondern er kann auch lediglich mit diesen verbunden sein, zum Beispiel über eine Kleb- und/oder Steckverbindung.

Bevorzugt ist der erste flächig dimensionierte, elastische Träger zumindest abschnittsweise in Richtung des zweiten flächig dimensionierten, elastischen Trägers elastisch verformbar, und der zweite flächig dimensionierte, elastische Träger ist zumindest abschnittsweise in Richtung des ersten flächig dimensionierten, elastischen Trägers elastisch verformbar, sodass das erste Kontaktmesser und/oder das zweite Kontaktmesser zumindest abschnittsweise elastisch verformbar ist. Der erste flächig dimensionierte, elastische Träger und der zweite flächig dimensionierte, elastische Träger können sich somit elastisch verformen, wenn das erste Kontaktmesser bzw. das zweite Kontaktmesser beispielsweise in ein Aufnahmeelement eingesteckt wird. Die Träger können sich verformen, sodass auf die Metallschicht wirkende Kräfte verringert werden und in der Folge deren Beschädigung vermieden wird. Wie sich herausgestellt hat, können mit Hilfe eines solchen Aufbaus reibungsbedingte Schäleffekte an der Metallschicht, die beim Einstecken des ersten Kontaktmessers bzw. des Kontaktmessers in ein Aufnahmeelement auftreten können, besonders effektiv vermindert werden. Eine oder zwei Längsseiten des ersten flächig dimensionierten, elastischen Trägers und/oder des zweiten flächig dimensionierten, elastischen Trägers können nach vorteilhaften Ausführungsformen der Erfindung zumindest abschnittsweise gefast ausgeführt sein. Auch dies kann den beschädigungsfreien Einsteckvorgang unterstützen.

Es ist vorteilhaft, wenn der erste flächig dimensionierte, elastische Träger und der zweite flächig dimensionierte, elastische Träger zumindest in einem Bereich des ersten Kontaktmessers und/oder des zweiten Kontaktmessers einander gegenüberliegend angeordnet und/oder zueinander fluchtend angeordnet sind. Es ist gleichwohl möglich, dass der erste flächig dimensionierte, elastische Träger und der zweite flächig dimensionierte, elastische Träger auch in anderen Bereichen einander gegenüberliegend angeordnet und/oder zueinander fluchtend angeordnet sind, zum Beispiel in Bereichen, in denen sie nach vorteilhaften Ausgestaltungsformen der Erfindung den Kondensatorkörper oder einen Teil des Kondensatorkörpers bilden. Der Bereich des ersten Kontaktmessers und/oder des zweiten Kontaktmessers ist vorteilhaft als ein Abschnitt des ersten flächig dimensionierten, elastischen Trägers bzw. des zweiten flächig dimensionierten, elastischen Trägers zu verstehen, in dem der erste flächig dimensionierte, elastische Träger bzw. der zweite flächig dimensionierte, elastische Träger das erste Kontaktmesser bzw. einen Teil desselben und/oder das zweite Kontaktmesser bzw. einen Teil desselben bildet.

Erfindungsgemäß kann vorgesehen sein, dass der erste flächig dimensionierte, elastische Träger zumindest in einem Bereich des ersten Kontaktmessers und/oder des zweiten Kontaktmessers von dem zweiten flächig dimensionierten, elastischen Träger beabstandet ist. Durch eine Beabstandung zwischen dem ersten flächig dimensionierten, elastischen Träger und dem zweiten, flächig dimensionierten, elastischen Träger wird ein Raum gebildet, in den sich der erste flächig dimensionierte, elastische Träger und der zweite flächig dimensionierte, elastische Träger biegen können, wenn das erste Kontaktmesser bzw. das zweite Kontaktmesser beim Einstecken in das Aufnahmeelement elastisch verformt wird. Ein Abstand zwischen dem ersten flächig dimensionierten, elastischen Träger und dem zweiten, flächig dimensionierten, elastischen Träger beträgt bevorzugt mindestens 1 mm und besonders bevorzugt mindestens 5 mm.

Nach einer vorteilhaften Ausführungsform der Erfindung umfasst das erste Kontaktmesser und/oder das zweite Kontaktmesser ferner ein Abstandselement, das zwischen dem ersten flächig dimensionierten, elastischen Träger und dem zweiten flächig dimensionierten, elastischen Träger angeordnet ist und das den ersten flächig dimensionierten, elastischen Träger von dem zweiten flächig dimensionierten, elastischen Träger beabstandet, wobei eine Breite des Abstandselements in dem Bereich des ersten Kontaktmessers und/oder des zweiten Kontaktmessers geringer ist als eine maximale Breite des ersten Kontaktmessers bzw. des zweiten Kontaktmessers. Insbesondere kann eine Breite des Abstandselements in dem Bereich des ersten Kontaktmessers geringer sein als eine maximale Breite des ersten Kontaktmessers und/oder eine Breite des Abstandselements in dem Bereich des zweiten Kontaktmessers kann geringer sein als eine maximale Breite des zweiten Kontaktmessers.

Die Breites des Abstandselements beträgt bevorzugt 3 % bis 20 % der maximalen Breite des ersten Kontaktmessers bzw. des zweiten Kontaktmessers. Insbesondere kann die Breite des Abstandselements in dem Bereich des ersten Kontaktmessers 3 % bis 20 % der maximalen Breite des ersten Kontaktmessers betragen und/oder die Breite des Abstandselements kann in dem Bereich des zweiten Kontaktmessers 3 % bis 20 % der maximalen Breite des zweiten Kontaktmessers betragen. Besonders bevorzugt beträgt die Breite des Abstandselements 5 % bis 15 % der maximalen Breite des ersten Kontaktmessers bzw. des zweiten Kontaktmessers. Insbesondere kann die Breite des Abstandselements in dem Bereich des ersten Kontaktmessers 5 % bis 15 % der maximalen Breite des ersten Kontaktmessers betragen und/oder die Breite des Abstandselements kann in dem Bereich des zweiten Kontaktmessers 5 % bis 15 % der maximalen Breite des zweiten Kontaktmessers betragen. Ferner kann als die Breite des Abstandselements 10 % der maximalen Breite des ersten Kontaktmessers bzw. des zweiten Kontaktmessers gewählt werden. Insbesondere kann die Breite des Abstandselements in dem Bereich des ersten Kontaktmessers 10 % der maximalen Breite des ersten Kontaktmessers betragen und/oder die Breite des Abstandselements kann in dem Bereich des zweiten Kontaktmessers 10 % der maximalen Breite des zweiten Kontaktmessers betragen. Bei Bereitstellung eines entsprechend schmal ausgestalteten Abstandselements können der erste flächig dimensionierte, elastische Träger und der zweite flächig dimensionierte, elastische Träger gut elastisch verformt werden.

Als das Abstandselement kann prinzipiell ein beliebiges Bauteil gewählt werden, wobei das Abstandselement vorzugsweise aus einem dielektrischen Material ausgeführt sein sollte. Nach anderen Ausführungsformen der Erfindung ist hingegen kein Abstandselement vorgesehen. Beispielsweise können der erste flächig dimensionierte, elastische Träger und der zweite flächig dimensionierte, elastische Träger voneinander beabstandet an dem Kondensatorkörper befestigt sein, wobei zwischen dem ersten flächig dimensionierten, elastischen Träger und dem zweiten, flächig dimensionierten, elastischen Träger im Bereich des ersten Kontaktmessers bzw. des zweiten Kontaktmessers kein Abstandselement befindlich ist. Stattdessen weisen das erste Kontaktmesser und/oder das zweite Kontaktmesser nach dieser Ausführungsform in diesem Bereich einen Leerraum auf.

Vorzugsweise ist das Abstandselement relativ zu dem ersten flächig dimensionierten, elastischen Träger und dem zweiten flächig dimensionierten, elastischen Träger zentriert angeordnet. Das Abstandselement ist somit bevorzugt von zwei Längskanten des ersten flächig dimensionierten, elastischen Trägers bzw. des zweiten flächig dimensionierten, elastischen Trägers gleich weit beabstandet.

Somit besteht nach beiden Seiten hin vorteilhaft ein übereinstimmendes Biegeverhalten.

Das Abstandselement wird nach einer vorteilhaften Variante der Erfindung durch einen weiteren flächig dimensionierten, elastischen Träger gebildet. Dies erlaubt eine besonders einfache Ausgestaltung des Koppelkondensators. Dies kann ferner den Vorteil aufweisen, dass sich auch der weitere flächig dimensionierte, elastische Träger beim Einstecken des ersten Kontaktmessers bzw. des Kontaktmessers in das Aufnahmeelement zumindest geringfügig verbiegen kann. Der weitere flächig dimensionierte, elastische Träger kann nach vorteilhaften Ausführungsformen der Erfindung auch einen Teil des Kondensatorkörpers bilden. Ferner ist es möglich, dass der weitere flächig dimensionierte, elastische Träger sowohl einen Teil des ersten Kontaktmessers als auch einen Teil des zweiten Kontaktmessers bildet. Nach anderen Varianten der Erfindung weist hingegen ein jedes Kontaktmesser einen gesonderten weiteren flächig dimensionierten, elastischen Träger auf.

Der mindestens eine flächig dimensionierte, elastische Träger wird bevorzugt durch ein Verbundmaterial umfassend Epoxidharz und Glasfasergewebe gebildet. Ein solches Verbundmaterial weist hervorragende elastische und elektrisch isolierende Eigenschaften auf. Besonders bevorzugt handelt es sich dabei um ein glasfaserverstärktes Epoxidharz der Klasse FR-4. Dies ist ein flammenhemmender Verbundwerkstoff. Alternativ können jedoch auch sonstige Materialien zur Bereitstellung des mindestens einen flächig dimensionierten, elastischen Trägers gewählt werden. Insbesondere kann der flächig dimensionierte, elastische Träger durch ein Leiterplattenmaterial gebildet werden. Die Metallschicht besteht nach einer vorteilhaften Variante der Erfindung aus Kupfer. Nach alternativen Varianten der Erfindung kann die Metallschicht anstelle von Kupfer jedoch auch durch ein anderes Metall oder durch eine Metalllegierung gebildet werden.

Nach einer weiteren Ausgestaltungsform der Erfindung wird der Koppelkondensator durch ein Stecksystem umfassend mehrere flächig dimensionierte, elastische Träger gebildet. Bei den flächig dimensionierten, elastischen Trägern handelt es sich vorzugsweise um Leiterplatten. Die flächig dimensionierten, elastischen Träger bilden vorzugsweise Steck- und/oder Aufnahmeteile des Stecksystems. So kann der Koppelkondensator vorzugsweise dadurch herstellbar sein, dass mehrere Leiterplattenteile zusammengesteckt werden. Bevorzugt ist das Stecksystem so ausgebildet, dass sämtliche Bauteile des Stecksystem allein aufgrund von Klemmkräften miteinander verbindbar sind. Es versteht sich aber, dass gemäß anderen Varianten der Erfindung eines feste Verbindung zwischen Bauteilen des Stecksystems durch eine Klebverbindung hergestellt werden kann, oder dass Hilfsmittel wie Schrauben, Klammern oder dergleichen verwendet werden, um Bauteile aneinander zu befestigen.

Die Metallschicht kann erfindungsgemäß eine Stärke von weniger als 100 Mikrometern aufweisen. Bevorzugt beträgt die Stärke weniger als 50 Mikrometer, und besonders bevorzugt weniger als 10 Mikrometer. Geringe Materialstärken führen zwar zu einer geringeren Widerstandskraft gegenüber mechanischen Beanspruchungen, jedoch werden dadurch, dass erfindungsgemäß der mindestens eine flächig dimensionierte, elastischen Träger vorgesehen ist, Schäleffekte und sonstige Beeinträchtigungen beim Einstecken des ersten Kontaktmessers bzw. des Kontaktmessers in das Aufnahmeelement vermieden.

Nach einem weiteren Aspekt der Erfindung wird eine Kontaktierungsanordnung vorgeschlagen, die den vorangehend beschriebenen Koppelkondensator und ein Aufnahmeelement zur elektrischen Kontaktierung des Koppelkondensators umfasst, wobei das Aufnahmeelement so dimensioniert ist, dass es das erste Kontaktmesser oder das zweite Kontaktmesser des Koppelkondensators klemmend aufnehmen kann. Das Aufnahmeelement kann erfindungsgemäß eine Stecköffnung bilden, in der das erste Kontaktmesser oder das zweite Kontaktmesser klemmend aufgenommen werden kann. Erfindungsgemäß kann das Aufnahmeelement zwei metallische Kontaktflächen aufweisen, die in der Stecköffnung angeordnet sind und die dafür vorgesehen sind, das erste Kontaktmesser oder das zweite Kontaktmesser elektrisch leitfähig zu kontaktieren. Vorzugsweise ist das Aufnahmeelement so ausgebildet, dass es eine elektrisch leitfähige Verbindung zwischen einem in der Stecköffnung angeordneten Kontaktmesser und einem an das Aufnahmeelement angeschlossenen Kabel herstellen kann. Bevorzugt ist das Aufnahmeelement so dimensioniert, dass es Kontaktmesser von Niederspannungs-Hochleistungssicherungen gemäß DIN 43620-1 aufnehmen bzw. halten kann. Besonders bevorzugt ist das Aufnahmeelement dazu eingerichtet, Kontaktmesser von Niederspannungs-Hochleistungssicherungen gemäß NH-2 nach DIN 43620-1 aufzunehmen bzw. zu halten.

Der Koppelkondensator und das Aufnahmeelement sind vorzugsweise so ausgebildet und/oder dimensioniert, dass eine vordefinierte Klemmkraft zwischen dem ersten Kontaktmesser und dem Aufnahmeelement bzw. zwischen dem zweiten Kontaktmesser und dem Aufnahmeelement erreicht wird, wenn das erste Kontaktmesser oder das zweite Kontaktmesser mindestens zur Hälfte seiner Länge in das Aufnahmeelement eingesteckt ist. Dies kann so umgesetzt sein, dass eine vordefinierte Klemmkraft zwischen dem ersten Kontaktmesser und dem Aufnahmeelement erreicht wird, wenn das erste Kontaktmesser mindestens zur Hälfte seiner Länge in das Aufnahmeelement eingesteckt ist und/oder eine vordefinierte Klemmkraft zwischen dem zweiten Kontaktmesser und dem Aufnahmeelement erreicht wird, wenn das zweite Kontaktmesser mindestens zur Hälfte seiner Länge in das Aufnahmeelement eingesteckt ist. Das Aufnahmeelement übt in dem Moment, in dem das erste Kontaktmesser bzw. das zweite Kontaktmesser in eine Stecköffnung des Aufnahmeelements gesteckt wird, zunächst nur eine geringe Kraft auf das Kontaktmesser aus. Das Kontaktmesser kann sich zunächst gut elastisch verformen. Mit zunehmender Einstecktiefe nimmt eine Verformbarkeit des Kontaktmessers ab. Dies kann nach vorteilhaften Varianten der Erfindung dadurch unterstützt werden, dass sich die Einstecköffnung mit zunehmender Tiefe verjüngt. Wenn das erste Kontaktmesser bzw. das zweite Kontaktmesser mindestens zur Hälfte seiner Länge in das Aufnahmeelement eingesteckt ist, wird die vordefinierte Klemmkraft erreicht. Die vordefinierte Klemmkraft kann prinzipiell gemäß einer beliebigen Vorgabe bemessen sein. Beispielsweise kann es sich bei der Klemmkraft um diejenige Klemmkraft handeln, die erforderlich ist, um den Koppelkondensator in montierter Position an dem Aufnahmeelement zu halten.

Weitere Merkmale und Vorteile der Erfindung ergeben sich aus den Zeichnungen, die dem Fachmann die Erfindung verdeutlichen sollen, sodass er die Erfindung ausführen kann. Die Zeichnungen beschränken die Erfindung jedoch nicht. Dennoch stellen die Zeichnungen vorteilhafte Aspekte der Erfindung dar, deren Merkmale - ggf. auch einzeln - zur Konkretisierung der unter Schutz zu stellenden Erfindung verwendet werden können. Dabei zeigt:
Fig. 1 eine schematische Darstellung des erfindungsgemäßen Koppelkondensators in einer perspektivischen Ansicht,
Fig. 2 eine schematische Darstellung des erfindungsgemäßen Koppelkondensators in einer Ansicht von der Seite, und
Fig. 3 eine schematische Darstellung des erfindungsgemäßen Koppelkondensators in einer Ansicht von vorne.

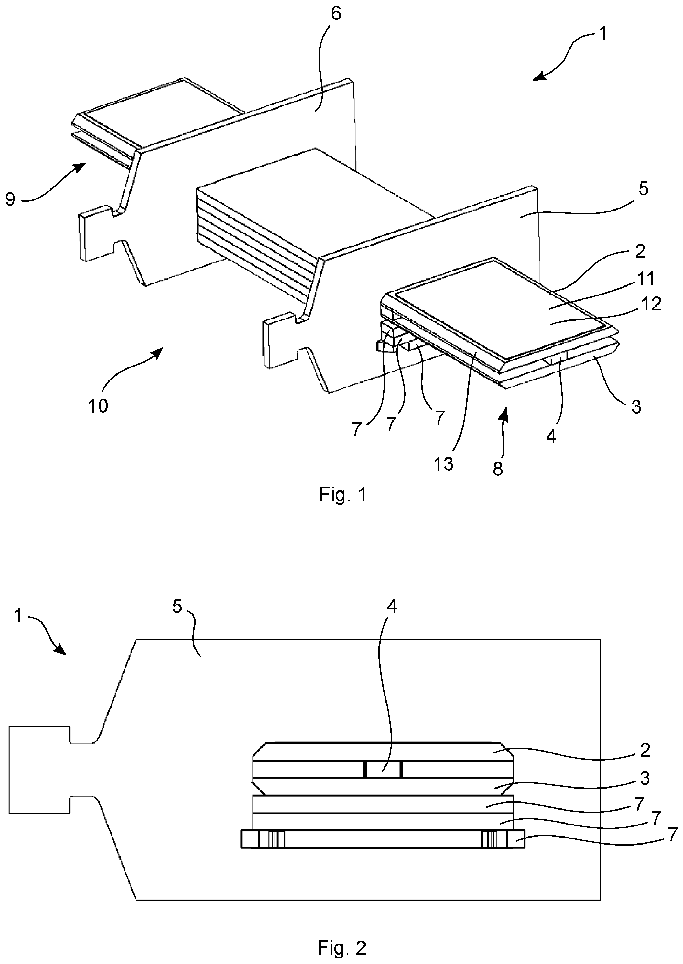

Fig. 1 zeigt eine schematische Darstellung des erfindungsgemäßen Koppelkondensators 1 in einer perspektivischen Ansicht. Der Koppelkondensator 1 weist einen ersten flächig dimensionierten, elastischen Träger 2 und einen zweiten flächig dimensionierten, elastischen Träger 3 auf. Zwischen dem ersten flächig dimensionierten, elastischen Träger 2 und dem zweiten flächig dimensionierten, elastischen Träger 3 ist ein weiterer flächig dimensionierter, elastischer Träger 4 angeordnet, der den ersten flächig dimensionierten, elastischen Träger 2 von dem zweiten flächig dimensionierten, elastischen Träger 3 beabstandet. Der weitere flächig dimensionierte, elastische Träger 4 weist bereichsweise eine Breite auf, die 10 % einer maximalen Breite des ersten flächig dimensionierten, elastischen Trägers 2 bzw. des zweiten flächig dimensionierten, elastischen Trägers 3 entspricht.

Der erste flächig dimensionierte, elastische Träger 2, der zweite flächig dimensionierte, elastische Träger 3 und der weitere flächig dimensionierte, elastische Träger 4 bestehen aus einem glasfaserverstärkten Epoxidharz der Klasse FR-4. Der erste flächig dimensionierte, elastische Träger 2, der zweite flächig dimensionierte, elastische Träger 3 und der weitere flächig dimensionierte, elastische Träger 4 sind in ein erstes Halteelement 5 und ein zweites Halteelement 6 des Koppelkondensators 1 eingesteckt. Zusätzliche flächig dimensionierte, elastische Träger 7 sind ebenfalls in die Halteelemente 5 und 6 eingesteckt. Die zusätzlichen flächig dimensionierten, elastischen Träger 7 sind kürzer als der erste flächig dimensionierte, elastische Träger 2, der zweite flächig dimensionierte, elastische Träger 3 und der weitere flächig dimensionierte, elastische Träger 4. Die Halteelemente 5 und 6 sowie die zusätzlichen flächig dimensionierten, elastischen Träger 7 sind ebenfalls aus dem glasfaserverstärkten Epoxidharz der Klasse FR-4 gefertigt.

Ein erstes Kontaktmesser 8 des Koppelkondensators 1 wird durch Abschnitte des ersten flächig dimensionierten, elastischen Trägers 2, des zweiten flächig dimensionierten, elastischen Trägers 3 und des Weiteren flächig dimensionierten, elastischen Trägers 4 gebildet, die sich in Richtung eines ersten Endes des Koppelkondensators 1 aus dem ersten Halteelement 5 erstrecken. Ein zweites Kontaktmesser 9 des Koppelkondensators 1 wird durch Abschnitte des ersten flächig dimensionierten, elastischen Trägers 2, des zweiten flächig dimensionierten, elastischen Trägers 3 und des Weiteren flächig dimensionierten, elastischen Trägers 4 gebildet, die sich in Richtung eines zweiten Endes des Koppelkondensators 1 aus dem zweiten Halteelement 6 erstrecken. Das erste Kontaktmesser 8 und das zweite Kontaktmesser 9 sind gemäß der Größe NH-2 nach DIN 43620-1 dimensioniert.

Ein Kondensatorkörper 10 des Kondensators 1, der zwischen dem ersten Kontaktmesser 8 und dem zweiten Kontaktmesser 9 angeordnet ist, wird durch Abschnitte des ersten flächig dimensionierten, elastischen Trägers 2, des zweiten flächig dimensionierten, elastischen Trägers 3, des Weiteren flächig dimensionierten, elastischen Trägers 4 und der zusätzlichen flächig dimensionierten, elastischen Träger 7 gebildet, sowie darüber hinaus durch das erste Halteelement 5 und das zweite Halteelement 6.

Kontaktflächen 11 des ersten Kontaktmessers 8 und des zweiten Kontaktmessers 9 werden durch Metallschichten 12 aus Kupfer gebildet, die oberseitig auf den ersten flächig dimensionierten, elastischen Träger 2 sowie unterseitig und hier nicht sichtbar auf den zweiten flächig dimensionierten, elastischen Träger 3 aufgebracht sind. Die Metallschichten 12 weisen jeweils eine Stärke von weniger als 100 Mikrometern auf. Wenn das erste Kontaktmesser 8 bzw. das zweite Kontaktmesser 9 in ein Aufnahmeelement eingesteckt werden, das die Kontaktflächen 11 elektrisch kontaktieren soll, dann übt das Aufnahmeelement Kräfte auf die Metallschichten 12 auf. Da sich der erste flächig dimensionierte, elastische Träger 2, der zweite flächig dimensionierte, elastische Träger 3 und in geringerem Maße auch der weitere flächig dimensionierte, elastische Träger 4 dabei elastisch verformen können, werden Schäleffekte vermieden, die dazu führen können, dass die Metallschichten 12 von dem ersten Kontaktmesser 8 bzw. dem zweiten Kontaktmesser 9 abgetragen werden. Zu beachten ist, dass Längsseiten 13 des ersten flächig dimensionierten, elastischen Trägers 2 und des zweiten flächig dimensionierten, elastischen Trägers 3 gefast sind, was den Einsteckvorgang zusätzlich unterstützt.

Die hier vorgestellte Ausführungsform eines erfindungsgemäßen Koppelkondensators 1 ist für eine Kopplung von Signalen in einem Bereich von 1,8 MHz bis 30 MHz optimiert. Er kann zur Netztrennung und bei der Datenübertragung nach den Kommunikationsstandards IEEE 1901:2010, IEEE 1901:2020 und G.hn über Stromleiter der öffentlichen Stromversorgung eingesetzt werden.

Fig. 2 zeigt eine schematische Darstellung des erfindungsgemäßen Koppelkondensators 1 in einer Ansicht von der Seite. In dieser Ansicht sind der erste flächig dimensionierte, elastische Träger 2, der zweite flächig dimensionierte, elastische Träger 3, der weitere flächig dimensionierte, elastische Träger 4 und mehrere zusätzliche flächig dimensionierte, elastische Träger 7 dargestellt, die übereinander angeordnet sind. Diese Bauteile werden durch das erste Halteelement 5 und das in Fig. 2 nicht sichtbare zweite Halteelement klemmend gehalten.

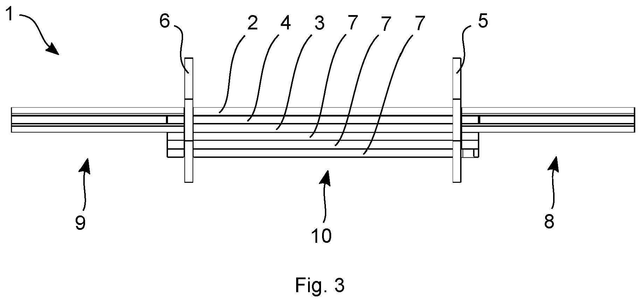

Fig. 3 zeigt eine schematische Darstellung des erfindungsgemäßen Koppelkondensators 1 in einer Ansicht von vorne. Hier sind der erste flächig dimensionierte, elastische Träger 2, der zweite flächig dimensionierte, elastische Träger 3, der weitere flächig dimensionierte, elastische Träger 4 und mehrere zusätzliche flächig dimensionierte, elastische Träger 7 dargestellt. Ferner sind das erste Halteelement 5 und das zweite Halteelement 6 gezeigt. In einem ersten Abschnitt des Koppelkondensators 1 wird der Koppelkondensator 1 durch das erste Kontaktmesser 8 gebildet. In einem zweiten Abschnitt des Koppelkondensators 1 wird der Koppelkondensator 1 durch das zweite Kontaktmesser 9 gebildet. In einem dritten Abschnitt des Koppelkondensators 1 wird der Koppelkondensator 1 durch den Kondensatorkörper 10 gebildet, der das erste Kontaktmesser 8 von dem zweiten Kontaktmesser 9 beabstandet.

### Bezugszeichenliste

- 1: Koppelkondensator
- 2: Erster flächig dimensionierter, elastischer Träger
- 3: Zweiter flächig dimensionierter, elastischer Träger
- 4: Weiterer flächig dimensionierter, elastischer Träger
- 5: Erstes Halteelement
- 6: Zweites Halteelement
- 7: Zusätzlicher flächig dimensionierter, elastischer Träger
- 8: Erstes Kontaktmesser
- 9: Zweites Kontaktmesser
- 10: Kondensatorkörper
- 11: Kontaktfläche
- 12: Metallschicht
- 13: Längsseite

## Patentansprüche

1. Koppelkondensator (1) mit einem ersten Kontaktmesser (8) und mit einem zweiten Kontaktmesser (9) zur elektrischen Kontaktierung des Koppelkondensators (1), wobei der Koppelkondensator (1) einen dielektrischen Kondensatorkörper (10) aufweist,
**dadurch gekennzeichnet, dass**
das erste Kontaktmesser (8) und/oder das zweite Kontaktmesser (9) elastisch ausgebildet ist, wobei das erste Kontaktmesser (8) und/oder das zweite Kontaktmesser (9) ein elastisches Kernmaterial und eine Metallschicht (12) aufweist, die eine Kontaktfläche (11) des ersten Kontaktmessers (8) bzw. des zweiten Kontaktmessers (9) bildet.

2. Koppelkondensator (1) nach Anspruch 1,
**dadurch gekennzeichnet, dass**
das elastische Kernmaterial mindestens einen flächig dimensionierten, elastischen Träger (2, 3, 4) aus einem dielektrischen Material umfasst.

3. Koppelkondensator (1) nach Anspruch 2,
**dadurch gekennzeichnet, dass**
das erste Kontaktmesser (8) und/oder das zweite Kontaktmesser (9) einen ersten flächig dimensionierten, elastischen Träger (2) und einen zweiten flächig dimensionierten, elastischen Träger (3) umfasst, wobei die Metallschicht (12) zur Bildung der Kontaktfläche (11) des ersten Kontaktmessers (8) bzw. des zweiten Kontaktmessers (9) auf zumindest einer nach außen gewandten Oberfläche des ersten flächig dimensionierten, elastischen Trägers (2) und/oder des zweiten flächig dimensionierten, elastischen Trägers (3) aufgebracht ist.

4. Koppelkondensator (1) nach Anspruch 3,
**dadurch gekennzeichnet, dass**
der erste flächig dimensionierte, elastische Träger (2) zumindest abschnittsweise in Richtung des zweiten flächig dimensionierten, elastischen Trägers (3) elastisch verformbar ist, und dass der zweite flächig dimensionierte, elastische Träger (3) zumindest abschnittsweise in Richtung des ersten flächig dimensionierten, elastischen Trägers (2) elastisch verformbar ist, sodass das erste Kontaktmesser (8) und/oder das zweite Kontaktmesser (9) zumindest abschnittsweise elastisch verformbar ist.

5. Koppelkondensator (1) nach einem der Ansprüche 3 oder 4,
**dadurch gekennzeichnet, dass**
der erste flächig dimensionierte, elastische Träger (2) und der zweite flächig dimensionierte, elastische Träger (3) zumindest in einem Bereich des ersten Kontaktmessers (8) und/oder des zweiten Kontaktmessers (9) einander gegenüberliegend angeordnet und/oder zueinander fluchtend angeordnet sind.

6. Koppelkondensator (1) nach einem der Ansprüche 3 bis 5,
**dadurch gekennzeichnet, dass**
der erste flächig dimensionierte, elastische Träger (2) zumindest in einem Bereich des ersten Kontaktmessers (8) und/oder des zweiten Kontaktmessers (9) von dem zweiten flächig dimensionierten, elastischen Träger (3) beabstandet ist.

7. Koppelkondensator (1) nach Anspruch 6,
**dadurch gekennzeichnet, dass**
das erste Kontaktmesser (8) und/oder das zweite Kontaktmesser (9) ferner ein Abstandselement umfasst, das zwischen dem ersten flächig dimensionierten, elastischen Träger (2) und dem zweiten flächig dimensionierten, elastischen Träger (3) angeordnet ist und das den ersten flächig dimensionierten, elastischen Träger (2) von dem zweiten flächig dimensionierten, elastischen Träger (3) beabstandet, wobei eine Breite des Abstandselements in dem Bereich des ersten Kontaktmessers (8) und/oder des zweiten Kontaktmessers (9) geringer ist als eine maximale Breite des ersten Kontaktmessers (8) bzw. des zweiten Kontaktmessers (9).

8. Koppelkondensator (1) nach Anspruch 7
**dadurch gekennzeichnet, dass**
die Breite des Abstandselements 3 % bis 20 % der maximalen Breite des ersten Kontaktmessers (8) bzw. des zweiten Kontaktmessers (9) beträgt.

9. Koppelkondensator (1) nach einem der Ansprüche 7 oder 8
**dadurch gekennzeichnet, dass**
das Abstandselement relativ zu dem ersten flächig dimensionierten, elastischen Träger (2) und dem zweiten flächig dimensionierten, elastischen Träger (3) zentriert angeordnet ist.

10. Koppelkondensator (1) nach einem der Ansprüche 7 bis 9,
**dadurch gekennzeichnet, dass**
das Abstandselement durch einen weiteren flächig dimensionierten, elastischen Träger (4) gebildet wird.

11. Koppelkondensator (1) nach einem der Ansprüche 2 bis 10,
**dadurch gekennzeichnet, dass**
der dielektrische Kondensatorkörper (10) teilweise oder vollständig durch den mindestens einen flächig dimensionierten, elastischen Träger (2, 3, 4) gebildet wird.

12. Koppelkondensator (1) nach einem der Ansprüche 2 bis 11,
**dadurch gekennzeichnet, dass**
der mindestens eine flächig dimensionierte, elastische Träger (2, 3, 4) durch ein Verbundmaterial umfassend Epoxidharz und Glasfasergewebe gebildet wird.

13. Koppelkondensator (1) nach einem der vorhergehenden Ansprüche,
**dadurch gekennzeichnet, dass**
die Metallschicht (12) aus Kupfer besteht.

14. Koppelkondensator (1) nach einem der vorhergehenden Ansprüche,
**dadurch gekennzeichnet, dass**
die Metallschicht (12) eine Stärke von weniger als 100 Mikrometern aufweist.

15. Kontaktierungsanordnung mit einem Koppelkondensator (1) nach einem der Ansprüche 1 bis 14 und mit einem Aufnahmeelement zur elektrischen Kontaktierung des Koppelkondensators (1), wobei das Aufnahmeelement so dimensioniert ist, dass es das erste Kontaktmesser (8) oder das zweite Kontaktmesser (9) des Koppelkondensators (1) klemmend aufnehmen kann.

16. Kontaktierungsanordnung nach Anspruch 15,
**dadurch gekennzeichnet, dass**
der Koppelkondensator (1) und das Aufnahmeelement so ausgebildet und/oder dimensioniert sind, dass eine vordefinierte Klemmkraft zwischen dem ersten Kontaktmesser (8) und dem Aufnahmeelement bzw. zwischen dem zweiten Kontaktmesser (9) und dem Aufnahmeelement erreicht wird, wenn das erste Kontaktmesser (8) oder das zweite Kontaktmesser (9) mindestens zur Hälfte seiner Länge in das Aufnahmeelement eingesteckt ist.
